(19) Europäisches Patentamt
European Patent Office
Office européen des brevets

(11) **EP 2 985 536 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(21) Anmeldenummer: **14181144.8**

(22) Anmeldetag: **15.08.2014**

(51) Int Cl.:
**F04B 49/06** *(2006.01)*          **F04B 49/20** *(2006.01)*
**F24D 19/10** *(2006.01)*          **G05D 1/00** *(2006.01)*
**F04D 15/00** *(2006.01)*

(54) **Regelverfahren für ein Pumpenaggregat**

Control method for a pump unit

Procédé de réglage pour un groupe motopompe

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.02.2016 Patentblatt 2016/07**

(73) Patentinhaber: **Grundfos Holding A/S**
**8850 Bjerringbro (DK)**

(72) Erfinder:
• **Nielsen, Brian Kongsgaard**
**8800 Viborg (DK)**

• **Kallesøe, Carsten Skovmose**
**8800 Viborg (DK)**

(74) Vertreter: **Patentanwälte Vollmann & Hemmer**
**Wallstraße 33a**
**23560 Lübeck (DE)**

(56) Entgegenhaltungen:
**EP-A1- 1 323 984          CA-A1- 2 274 782**
**DE-A1-102006 049 440**

EP 2 985 536 B1

**Beschreibung**

Die Erfindung betrifft ein Regelverfahren für ein Pumpenaggregat in einem pneumatischen oder hydraulischen System sowie ein Pumpensystem, welches zum Ausführen eines solchen Regelverfahrens ausgebildet ist.

In verzweigten hydraulischen Systemen, wie beispielsweise Heizungsanlagen mit mehreren Verbrauchern oder Wasserversorgungssystemen mit verschiedenen Entnahmestellen besteht die Schwierigkeit, im hydraulischen System vorhandene Pumpenaggregate zum Fördern des Mediums so zu regeln, dass sie an allen Punkten des hydraulischen Systems einen ausreichenden Druck bereitstellen, gleichzeitig aber der Druck nicht zu hoch ist, um zum einen unerwünschte Strömungsgeräusche im System zu vermeiden und zum anderen den Energieverbrauch des Pumpenaggregates minimal zu halten.

Hierzu sind aus dem Stand der Technik Systeme bekannt, welche an einer oder mehreren Stellen im hydraulischen System beispielsweise eine Versorgungstemperatur oder einen Durchfluss erfassen und die Regelung des Pumpenaggregates auf den Bereich mit der höchsten Last auslegen. Ein solches System ist beispielsweise aus DE 33 15 828 bekannt. Weitere Regelungsverfahren für drehzahlgeregelte Pumpen in hydraulischen Systemen sind beispielsweise in den Dokumenten EP 1 323 984 A1, DE 10 2006 049 440 A1 und CA 2 274782 A1 offenbart. Es ist Aufgabe der Erfindung, ein Regelverfahren für ein Pumpenaggregat in einem pneumatischen oder hydraulischen System derart zu verbessern, dass bei minimalem Energieverbrauch des Pumpenaggregates das hydraulische System derart mit Druck versorgt wird, dass im hydraulischen System angeordnete Ventilelemente in einem optimalen Regelbereich arbeiten können.

Diese Aufgabe wird durch ein Regelverfahren mit den in Anspruch 1 angegebenen Merkmalen sowie durch ein Pumpensystem mit den in Anspruch 18 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Regelverfahren dient für zumindest ein Pumpenaggregat in einem pneumatischen oder hydraulischen System. Ein solches hydraulisches System kann beispielsweise ein Wasserversorgungsnetzwerk oder eine Heizungsanlage, insbesondere mit einer Vielzahl von Verbrauchern sein. In einem solchen hydraulischen System können an den verschiedenen Verbrauchern Ventile zur Einstellung bzw. Regelung des Durchflusses für den jeweiligen Verbraucher vorgesehen sein.

Nachfolgend wird die Erfindung weiter anhand eines hydraulischen Systems beschrieben, es ist jedoch zu verstehen, dass die Erfindung entsprechend auch in einem pneumatischen System, beispielsweise einem Belüftungssystem, wie einem Heizungs- oder Klimatisationssystem, welches mit temperierter Luft arbeitet, Verwendung finden kann. Auch ist zu verstehen, dass wenn die Erfindung nachfolgend am Beispiel einer Heizungsanlage beschrieben wird, die Erfindung in entsprechender Weise auch in anderen hydraulischen Systemen, wie Klimatisationssystemen oder Wasserversorgungssystemen verwirklicht werden kann.

Bei dem erfindungsgemäßen Regelverfahren ist vorgesehen, dass die Drehzahl des zumindest einen Pumpenaggregates in Abhängigkeit mehrerer in dem System erfassten Variablen regulierbar ist. Dabei kann ein einziges Pumpenaggregat vorgesehen sein, es können jedoch auch mehrere, parallel und/oder in Reihe geschaltete Pumpenaggregate vorgesehen sein, welche in entsprechender Weise geregelt werden können.

Erfindungsgemäß ist vorgesehen, dass die erfassten Variablen nicht direkt der Regelung zugrundegelegt werden, sondern dass aus den mehreren erfassten Variablen auf Grundlage einer stückweise oder abschnittsweise monotonen Funktion jeweils ein Fehlersignal erzeugt wird, mehrere Fehlersignale addiert werden und auf Grundlage der addierten Fehlersignale die Drehzahl des Pumpenaggregates so reguliert wird, dass sich das addierte Fehlersignal dem Wert null annähert. Unter einer abschnittsweise monotonen Funktion wird hierbei eine Funktion verstanden, welche aus zumindest zwei Funktionen bzw. Abschnitten mit unterschiedlichen Funktionseigenschaften zusammengesetzt ist. Dabei ist die Funktion in allen den Abschnitten jeweils monoton. Diese abschnittsweise monotone Funktion bedeutet beispielsweise, dass für unterschiedliche Größenbereiche der erfassten Variablen verschiedene Funktionen zur Berechnung der Fehlersignale zugrundegelegt werden. Die Verwendung der Fehlersignale hat den Vorteil, dass diese einfacher in die Regelung des Pumpenaggregates einfließen können, da die Fehlersignale über die Funktion so eingestellt werden können, dass der Regelung des Pumpenaggregates mehrere Fehlersignale zugrundegelegt werden, welche unabhängig von der genauen Ausgestaltung des hydraulischen Systems und dessen Komponenten sind. Dies ermöglicht eine einfache Anpassung und insbesondere auch eine einfachere Regelung des Pumpenaggregates auf Grundlage mehrerer Fehlersignale, da diese in einfacher Weise miteinander addiert werden können. Jede Variable kann im System durch geeignete Sensoren erfasst werden oder direkt von Stellgliedern, wie beispielsweise Ventilen als für deren Funktionszustand charakteristische Größe abgenommen bzw. ausgegeben werden.

So sind die mehreren Variablen jeweils beispielsweise ein in dem System erfasster Druckwert oder Ventilöffnungsgrad. Der Ventilöffnungsgrad kann direkt am Ventil abgegriffen werden oder ein Steuersignal für das Ventil, welches dem Ventilöffnungsgrad proportional ist, sein. Zum Erfassen des Druckwertes kann beispielsweise ein separater Drucksensor in dem hydraulischen oder pneumatischen System angeordnet sein.

Gemäß einer weiteren bevorzugten Ausführungsform können die mehreren Variablen jeweils ein in dem System erfasster Temperaturwert oder Durchflusswert sein. Hierzu können ebenfalls geeignete Sensoren im System vorgesehen sein. Ein Durchflusswert kann aber beispielsweise auch direkt aus einem weiteren, im System angeordneten Pumpenaggregat abgeleitet werden, indem er dort auf Grundlage anderer im Pumpenaggregat erfasster Größen, insbesondere der Drehzahl des Pumpenaggregates bestimmt wird. Im der Erfindung zu Grunde liegenden Fall, in dem mehrere Variablen im System erfasst werden, können dies mehrere Druckwerte, mehrere Ventilöffnungsgrade, mehrere Temperaturwerte oder mehrere Durchflusswerte sein. Es können auch verschiedene Werte in Kombination erfasst werden, wobei für jede Variable auf Grundlage der genannten abschnittsweise monotonen Funktion jeweils ein Fehlersignal ausgegeben wird. Die Berechnung bzw. Ausgabe des Fehlersignals hat den Vorteil, dass so auf einfache Weise in die Regelung des Pumpenaggregates verschiedene Variablen, beispielsweise Ventilöffnungsgrade und erfasste Temperaturwerte einfließen können.

Vorzugsweise wird die erfasste Variable zur Berechnung des Fehlersignals mit zumindest einem Grenzwert verglichen und bei Erreichen des Grenzwertes wird die Funktion aus der Gruppe von Funktionen, auf deren Grundlage das Fehlersignal erzeugt wird, in vorbestimmter Weise gewechselt. Das bedeutet, der Grenzwert bildet die Grenze zwischen zwei Abschnitten bzw. Funktionen der abschnittsweise monotonen Funktion. Das heißt, für verschiedene vorbestimmte Größenbereiche der Variable sind verschiedene Funktionen zur Ermittlung des Fehlersignals vorgesehen. So können beispielsweise zwei miteinander verknüpfte Funktionen bzw. Abschnitte der abschnittsweise monotonen Funktion vorgesehen sein, wobei eine erste Funktion z. B. unterhalb des Grenzwertes und eine zweite Funktion z. B. bei Erreichen und Überschreiten des Grenzwertes verwendet wird. Entsprechend können auch mehr als zwei Funktionen bzw. Abschnitte verwendet werden, welche bei entsprechenden Grenzwerten gewechselt werden.

Vorzugsweise kann die erfasste Variable mit einem oberen und einem unteren Grenzwert verglichen werden und bei Erreichen des oberen Grenzwertes sowie bei Erreichen des unteren Grenzwertes kann jeweils der Abschnitt der abschnittsweise monotonen Funktion bzw. die Funktion aus der Gruppe von Funktionen, auf deren Grundlage das Fehlersignal erzeugt wird, in vorbestimmter Weise gewechselt werden. So können bei dieser Ausführungsform beispielsweise drei verschiedene Funktionen bzw. Abschnitte verwendet werden, wobei eine erste Funktion unterhalb des unteren Grenzwertes, eine zweite Funktion zwischen dem unteren und dem oberen Grenzwert und eine dritte Funktion oberhalb des oberen Grenzwertes zur Anwendung kommt.

Gemäß einer weiteren bevorzugten Ausführungsform geben die oberhalb des oberen Grenzwertes und/oder unterhalb des unteren Grenzwertes zum Einsatz kommenden Funktionen ein von der Größe der erfassten Variablen abhängiges, insbesondere linear abhängiges Fehlersignal aus. Dabei kann auch unterhalb des unteren Grenzwertes und oberhalb des oberen Grenzwertes dieselbe Funktion zum Einsatz kommen.

Gemäß einer weiteren bevorzugten Ausführungsform kann unterhalb des oberen Grenzwertes und/oder oberhalb des unteren Grenzwertes eine Funktion zum Einsatz kommen, welche ein von der Größe der Variablen abhängiges, insbesondere linear abhängiges Fehlersignal ausgibt, wobei die Funktion zwischen Variable und Fehlersignal oberhalb und unterhalb des jeweiligen Grenzwertes unterschiedlich sind, insbesondere unterschiedliche Steigungen aufweisen. So kann beispielsweise zwischen dem unteren und dem oberen Grenzwert eine Funktion mit geringerer Steigung zum Einsatz kommen, als oberhalb des oberen und unterhalb des unteren Grenzwertes.

Gemäß einer weiteren bevorzugten Ausführungsform kann in einem Bereich oberhalb des unteren Grenzwertes und unterhalb des oberen Grenzwertes die Funktion eine Nullstelle mit einem Vorzeichenwechsel aufweisen. Die Nullstelle liegt vorzugsweise in der Mitte zwischen dem oberen und dem unteren Grenzwert. An der Nullstelle wäre das Fehlersignal somit Null. Dies ermöglicht eine Regelung des Pumpenaggregates so auszubilden, dass sie vorzugsweise das Pumpenaggregat in seiner Drehzahl so regelt, dass die Variable auf den Bereich der Nullstelle oder mehrere Variablen so geregelt werden, dass die Fehlersignale im Gesamtsystem sich zu null addieren, das heißt die Systemparameter so eingestellt werden, dass die Summe der Fehlersignale vorzugsweise den Wert null annimmt bzw. sich dem Wert null annähert.

Gemäß einer weiteren möglichen Ausführungsform der Erfindung kann das Fehlersignal, welches bei Erreichen des oberen Grenzwertes und oberhalb des oberen Grenzwertes ausgegeben wird, ein anderes Vorzeichen aufweisen, als das Fehlersignal, welches bei Erreichen oder unterhalb des unteren Grenzwertes ausgegeben wird. Dies ermöglicht eine Regelung, welche dazu beiträgt, die Variable in dem Bereich zwischen dem oberen und dem unteren Grenzwert zu halten.

Gemäß einer weiteren möglichen Ausführungsform kann eine Funktion bzw. ein Abschnitt der abschnittsweise monotonen Funktion oder können mehrere der zum Einsatz kommenden Funktionen bzw. Abschnitte auch so ausgebildet sein, dass sie einen konstanten Wert, insbesondere den Wert Null für das Fehlersignal ausgeben. So kann beispielsweise oberhalb oder unterhalb eines Grenzwertes die Funktion so gewählt sein, dass sie einen solchen konstanten Wert ausgibt.

Weiter bevorzugt kann das Erzeugen des Fehlersignals in einer in einem Sensor zum Erfassen der Variablen zugeordneten Signalverarbeitungseinrichtung erfolgen und das erzeugte Fehlersignal zu einer Regeleinrichtung des Pumpenaggregates übertragen werden, welche die Regulierung der Drehzahl des Pumpenaggregates bewirkt. Diese Ausgestaltung ist besonders vorteilhaft, da so die Steuereinrichtung des Pumpenaggregates vollkommen unabhängig von der Art der verwendeten Sensoren bzw. Stellelemente, an welchen die Variablen erfasst werden, ausgebildet werden kann. Die Signalverarbeitungseinrichtung kann speziell an den jeweiligen Sensor bzw. das Stellelement, beispielsweise ein Ventil, angepasst sein, sodass sie die passenden bzw. gewünschten Funktionen enthält, welche die charakteristischen Eigenschaften des Sensors bzw. des Bereichs des hydraulischen Systems, an welchem die Variable erfasst wird, berücksichtigt. Das Fehlersignal kann an die verwendete Steuer- bzw. Regeleinrichtung des Pumpenaggregates angepasst sein, sodass ein standardisiertes Fehlersignal ausgegeben wird. Bevorzugt können die Funktionen in der Signalverarbeitungseinrichtung anpass- oder einstellbar sein.

Besonders bevorzugt kann die Signalverarbeitungseinrichtung direkt in den Sensor bzw. das Stellelement wie ein Ventil integriert sein. Die Signalverarbeitungseinrichtung kann jedoch auch als separates Bauteil ausgebildet sein, welchem als Eingangsgröße das Ausgangssignal eines Sensors bzw. eines Stellelementes wie eines Ventils zugeführt wird. Es ist auch möglich, eine Signalverarbeitungseinrichtung vorzusehen, welche mehrere Sensoren bzw. Stellelemente wie Ventile bedient und entsprechend mehrere Fehlersignale für die angeschlossenen Sensoren bzw. Stellelemente ausgibt.

Wie oben bereits beschrieben, ist das System so ausgebildet, dass mehrere Variablen erfasst werden, basierend auf denen jeweils auf Grundlage einer Gruppe von zumindest zwei miteinander verknüpften Funktionen bzw. einer abschnittsweise monotonen Funktion ein Fehlersignal erzeugt wird. Dabei wird für jede der Variablen von einer entsprechenden abschnittsweise monotonen Funktion jeweils ein Fehlersignal erzeugt. Da die Fehlersignale vorzugsweise, wie vorangehend beschrieben, standardisiert sind und die Anpassung an die jeweiligen Sensoren bzw. Bereiche des Systems, in welchem die Sensoren angeordnet sind, über die jeweiligen Funktionen erfolgt, ermöglicht dies, verschiedene Sensoren bzw. Stellelemente wie Ventile, welche die Variablen erfassen bzw. ausgeben, in einem System ohne Probleme miteinander zu kombinieren und in die Regelung des Pumpenaggregates einfließen zu lassen.

Gemäß der Erfindung werden mehrere, vorzugsweise alle Fehlersignale im System addiert und die Regulierung der Drehzahl des Pumpenaggregates erfolgt auf Grundlage der addierten Fehlersignale. Dabei erfolgt die Regulierung der Drehzahl des Pumpenaggregates so, dass sich das addierte Fehlersignal dem Wert null annähert. Auf diese Weise werden die verschiedenen Fehlersignale miteinander verknüpft und die Drehzahl des Pumpenaggregates so reguliert bzw. geregelt, dass in allen Bereichen des Systems, in denen Variablen erfasst und auf deren Grundlage Fehlersignale bestimmt werden, die gewünschten hydraulischen Sollwerte, sei es Druck, Temperatur, Durchfluss und/oder beispielsweise ein Ventilöffnungsgrad etc. erreicht werden.

Gemäß einer besonderen Ausführungsform der Erfindung können die einzelnen Fehlersignale vor der Addition mit individuellen Gewichtungsfaktoren multipliziert werden. Diese Multiplikation kann ebenfalls in der vorangehend beschriebenen Signalverarbeitungseinrichtung oder aber auch in einer Steuereinrichtung des Pumpenaggregates erfolgen. Durch die Gewichtungsfaktoren werden die Fehlersignale einzelner Bauteile im System unterschiedlich gewichtet, sodass beispielsweise bestimmten Ventilen oder Abschnitten des Systems ein höheres Gewicht bei der Regelung des Pumpenaggregates gegeben werden kann, um beispielsweise in diesem Bereich stets einen erforderlichen Durchfluss zu priorisieren.

Gemäß einer alternativen Ausführungsform der Erfindung ist es möglich, aus einer Mehrzahl von Fehlersignalen mehrere Fehlersignale auszuwählen, auf deren Grundlage die Regulierung der Drehzahl des Pumpenaggregates erfolgt. Auch in diesem Fall kann gegebenenfalls ebenfalls eine Gewichtung oder eine Priorisierung der Fehlersignale erfolgen. So kann einzelnen Fehlersignalen eine Priorität für die Auswahl zugeordnet werden. Mehrere Fehlersignale werden, wie vorangehend beschrieben, addiert und auch gegebenenfalls zuvor mit Gewichtungsfaktoren multipliziert. Die Drehzahl des Pumpenaggregates wird vorzugsweise in Abhängigkeit eines Differenzdruckes oder eines Durchflusses geregelt und der Differenzdruck oder der Durchfluss wird auf Grundlage eines oder mehrerer Fehlersignale reguliert. Das heißt auf Grundlage der Fehlersignale wird zunächst der gewünschte Differenzdruck oder Durchfluss ausgewählt und anschließend erfolgt die Regelung des Pumpenaggregates so, dass dieser Differenzdruck oder Durchfluss von dem Pumpenaggregat erreicht wird. Dazu kann die Drehzahl des Pumpenaggregates von einer Steuereinrichtung des Pumpenaggregates variiert werden.

Die Drehzahl des Pumpenaggregates kann abhängig von dem Fehlersignal direkt oder indirekt in vorgegebenen Schritten verändert werden. Wenn das Fehlersignal z. B. zur Bestimmung des Differenzdruckes oder des Durchflusses, welche das Pumpenaggregat erreichen soll, wie vorangehend beschrieben, verwendet wird, wäre dies eine indirekte Vorgabe der Drehzahl. Durch das Fehlersignal kann eine kontinuierliche Anpassung der Drehzahl in direkter oder indirekter Weise erfolgen oder auch eine Anpassung in vorgegebenen Schritten, in welchen die Drehzahl erhöht oder verringert wird, um einen gewünschten Durchfluss und/oder Differenzdruck oder auch direkt die Minimierung eines Fehlersignals zu erreichen.

Besonders bevorzugt ist es möglich, dass die Drehzahl des zumindest einen Pumpenaggregates zusätzlich zu dem Fehlersignal auf Grundlage eines Algorithmus zur Minimierung der Leistungsaufnahme bzw. des Energieverbrauches geregelt wird. Diese beiden Algorithmen bzw. Regelungen können miteinander verknüpft oder einander überlagert sein, sodass die Pumpensteuerung stets bestrebt ist, den Energieverbrauch zu minimieren, solange die Fehlersignale auf einen minimalen Wert bzw. idealerweise auf einem Wert Null gehalten werden. Werden der Regelung Fehlersignale zugeführt, führt dies gegebenenfalls zu einer Änderung der Drehzahl des Pumpenaggregates, welche der Minimierung des Energieverbrauches entgegengesetzt ist. Dies erfolgt dann solange, bis die hydraulischen Parameter des Systems durch Erfassung an den jeweiligen Sensoren in den gewünschten Grenzen gehalten werden. Wenn gleichzeitig eine Minimierung des Energieverbrauchs stattfindet, wird somit erreicht, dass die hydraulischen Sollwerte bei minimalem Energieverbrauch erreicht werden können.

Der Algorithmus zur Minimierung des Energieverbrauchs ist bevorzugt entsprechend derart ausgebildet, dass er bestrebt ist, die Drehzahl des Pumpenaggregates zu verringern. Führt die Verringerung der Drehzahl dann dazu, dass einzelne Sensoren oder Stellelemente Fehlersignale ausgeben, so bewirken diese Fehlersignale z. B. wieder eine Erhöhung der Drehzahl, sodass die hydraulischen Sollwerte erreicht werden können.

Neben dem vorangehend beschriebenen Regelverfahren ist Gegenstand der Erfindung auch ein Pumpensystem. Das erfindungsgemäße Pumpensystem weist zumindest einen Sensor zum Erfassen einer Variablen in einem hydraulischen oder pneumatischen System auf. Der Sensor kann dabei ein Sensor sein, wie er vorangehend beschrieben wurde, welcher beispielsweise Temperatur, Durchfluss und/oder den Druck erfasst. Dabei kann der Sensor als separater Sensor ausgebildet sein oder Teil einer Stelleinrichtung, wie beispielsweise eines Ventils oder eines Pumpenaggregates sein. Im Falle eines Ventils kann der Sensor den Ventilöffnungsgrad erfassen und ausgeben. Im Sinne eines Sensors wird dabei auch eine Stelleinrichtung wie ein Ventil aufgefasst, welches den Öffnungsgrad in anderer Weise erfasst oder ausgibt. In einem Pumpenaggregat kann beispielsweise aus den elektrischen und/oder hydraulischen Größen ebenfalls der Durchfluss erfasst bzw. bestimmt werden und im Sinne eines Sensors ausgegeben werden.

Zusätzlich zu dem Sensor ist zumindest eine Signalverarbeitungseinrichtung vorgesehen, welche zum Erzeugen zumindest eines Fehlersignals auf Grundlage der erfassten Variablen ausgebildet ist. Ferner weist das Pumpensystem zumindest ein Pumpenaggregat mit einer Regeleinrichtung auf, welche zum Empfang des zumindest einen Fehlersignals von der Signalverarbeitungseinrichtung und zur Regulierung des Pumpenaggregates auf Grundlage des zumindest einen Fehlersignals ausgebildet ist. Dabei sind die Regeleinrichtung und die Signalverarbeitungseinrichtung zum Ausführen eines Regelverfahrens, wie es vorangehend beschrieben wurde, ausgebildet. Die Signalverarbeitungseinrichtung und die Regeleinrichtung sind vorzugsweise räumlich voneinander beabstandet, können gegebenenfalls jedoch auch in eine elektronische Baugruppe integriert sein. Bevorzugt ist die Signalverarbeitungseinrichtung in der Nähe des Sensors angeordnet, insbesondere in diesen integriert, während die Regeleinrichtung vorzugsweise in der Nähe des Pumpenaggregates angeordnet ist, vorzugsweise in einem Elektronikgehäuse direkt am Antriebsmotor des Pumpenaggregates angeordnet ist.

Nachfolgend wird die Erfindung beispielhaft anhand der beigefügten Figuren beschrieben. In diesen zeigt:

Fig. 1            ein erstes Beispiel für ein hydraulisches System der Erfindung,

Fig. 2            ein zweites Beispiel für ein hydraulisches System gemäß der Erfindung,

Fig. 3            ein drittes Beispiel für ein hydraulisches System gemäß der Erfindung,

Fig. 4            ein viertes Beispiel für ein hydraulisches System gemäß der Erfindung,

Fig. 5            ein fünftes Beispiel für ein hydraulisches System gemäß der Erfindung,

Fig. 6            ein sechstes Beispiel für ein hydraulisches System gemäß der Erfindung,

Fig. 7            ein siebtes Beispiel für ein hydraulisches System gemäß der Erfindung,

Fig. 8A - Fig. 8C      drei Varianten für eine Gruppe von Funktionen zur Erzeugung eines Fehlersignals auf Basis eines Ventilöffnungsgrades,

Fig. 9A - Fig. 9C      drei Varianten einer Gruppe verknüpfter Funktionen zur Erzeugung eines Fehlersignals auf Grundlage eines Differenzdruckes,

Fig. 10A - Fig. 10C    drei Varianten einer Gruppe von Funktionen zur Erzeugung eines Fehlersignals auf Grundlage eines Temperaturwertes,

Fig. 11           das erfindungsgemäße Regelverfahren gemäß einer ersten Ausführungsform

Fig. 12           schematisch das Regelverfahren der Erfindung gemäß einer zweiten Ausführungsform.

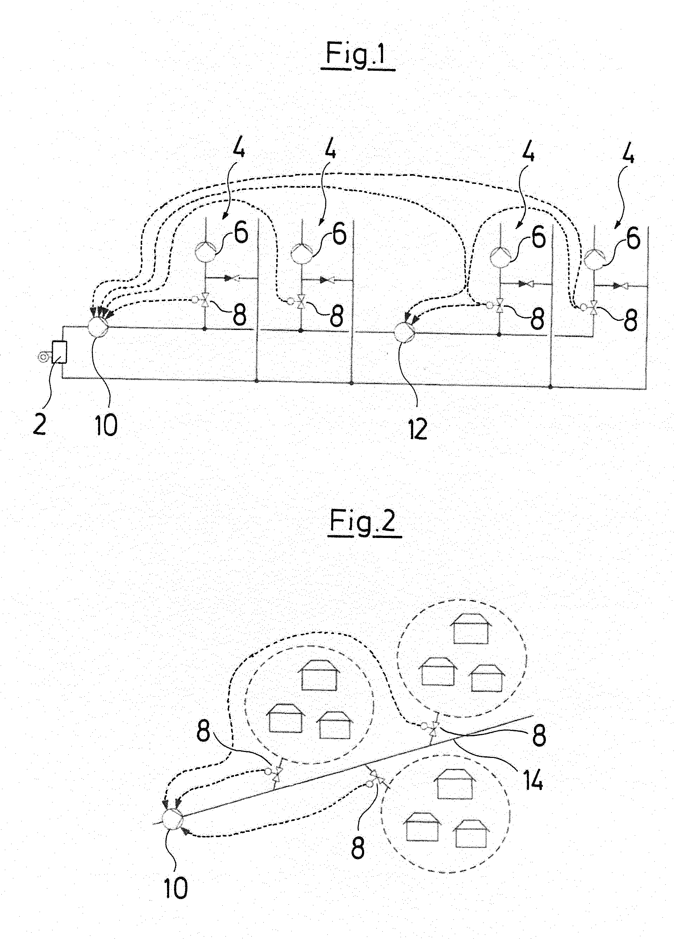

Anhand der Figuren 1 bis 7 werden verschiedene Varianten von hydraulischen Systemen beschrieben, in welchen ein erfindungsgemäßes Regelverfahren, wie es nachfolgend beschrieben wird, zur Anwendung kommen kann. Es ist zu verstehen, dass dieses Prinzip sich von hydraulischen Systemen in der gleichen Weise auf pneumatische Systeme, beispielsweise Lüftungssysteme übertragen lässt, welche ebenfalls Gegenstand der Erfindung sind.

Fig. 1 zeigt ein Heizungs- und/oder Kühlsystem mit einer Wärme- oder Kältequelle 2, welche im Falle einer Wärmequelle beispielsweise als Heizkessel ausgebildet sein kann. Das gezeigte System weist mehrere, in diesem Beispiel vier Lastkreise 4 auf, welche als Mischerkreise mit jeweils einer Mischerpumpe 6 und einem Regulierventil 8 ausgestattet sind. Über den Öffnungsgrad des Regulierventils 8 wird die Zufuhr von Wärmeträgermedium von der Wärme- oder Kältequelle 2 in den jeweiligen Lastkreis 4 geregelt. Dies kann beispielsweise raumtemperaturabhängig erfolgen, um eine vorbestimmte Raumtemperatur zu erreichen. In der Zufuhrleitung sind hier zwei Pumpenaggregate 10, 12 in Form von Umwälzpumpenaggregaten angeordnet, welche das Wärmeträgermedium, beispielsweise Wasser, von der Wärme- oder Kältequelle 2 zu den Lastkreisen 4 fördern. Dabei liegt das Pumpenaggregat 10 stromaufwärts aller vier Lastkreise, während das zweite Pumpenaggregat 12 stromabwärts der ersten zwei Lastkreise und stromaufwärts der nachfolgenden zwei Lastkreise 4 gelegen ist. Die Regulierventile 8 sind so ausgebildet, dass sie den Ventilöffnungsgrad erfassen und in einer Signalverarbeitungseinrichtung, wie weiter unten dargelegt werden wird, ein Fehlersignal erzeugen, welches an die Pumpenaggregate 10 und 12 zu deren Drehzahlregelung übertragen wird. Dies ist in Fig.1 durch die gestrichelten Linien gezeigt, wobei zu erkennen ist, dass die Fehlersignale aller vier Regulierventile 8 zu dem ersten Pumpenaggregat 10 übertragen werden, während die Fehlersignale der beiden stromabwärtigen Lastkreise 4 nur an das zweite Pumpenaggregat 12 übertragen werden, welches nur für die Versorgung dieser beiden Lastkreise 4 vorgesehen ist.

Das in Fig. 2 gezeigte hydraulische System stellt ein Wasserversorgungsnetz dar, mit einem Pumpenaggregat 10 und drei Regulierventilen 8. In diesem Fall können die Regulierventile 8 als Druckregler arbeiten, um den Druck in den sich anschließenden Zweigen des hydraulischen Systems zu regeln. Das Pumpenaggregat 10 fördert in eine zentrale Versorgungsleitung 14, von welcher Abzweige mit den Regulierventilen 8 abzweigen, beispielsweise jeweils zur Versorgung mehrerer Gebäude, z. B. in einen Stadtteil. Über die Regulierventile 8 wird der Druck in diesen Teilen bzw. Abzweigen reguliert. Auch diese Regulierventile 8 geben ihren Ventilöffnungsgrad aus, auf dessen Grundlage, wie nachfolgend beschrieben wird, in einer Signalverarbeitungseinrichtung ein Fehlersignal erzeugt wird, welches an das Pumpenaggregat 10 übertragen wird, um dies auf Grundlage dieser Fehlersignale in seiner Drehzahl zu regulieren.

Unter einem Pumpenaggregat 10 im Sinne dieser Beschreibung kann auch eine Anordnung von mehreren Pumpen verstanden werden. Das Pumpenaggregat kann beispielsweise eine Booster-Pumpe oder eine Booster-Pumpenanordnung sein, wie sie insbesondere in einem Wasserversorgungsnetzwerk zum Einsatz kommen.

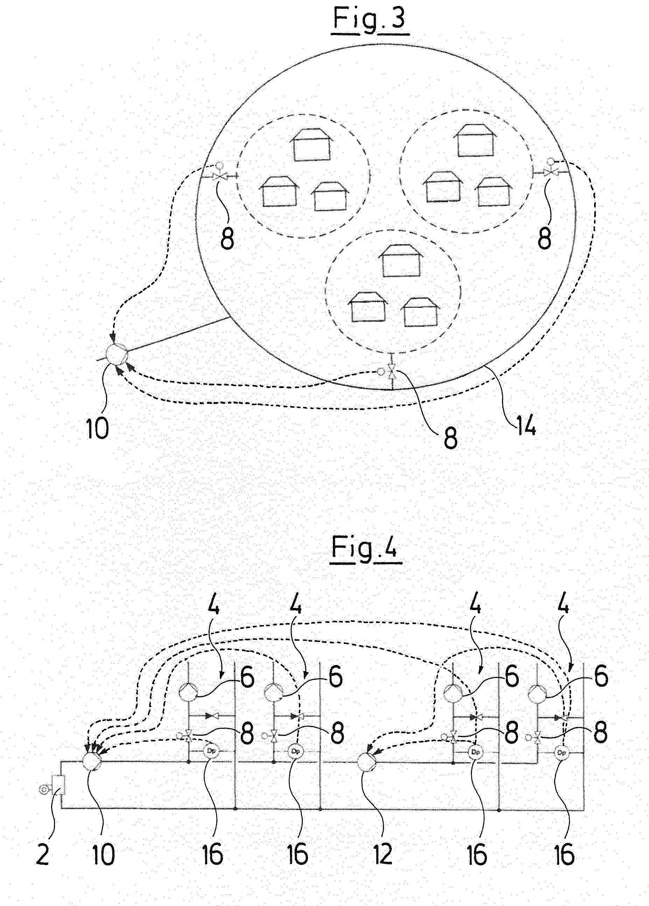

Fig. 3 zeigt eine Variante der Ausgestaltung in Fig. 2, bei welcher die Versorgungsleitung 14 als Ringleitung ausgebildet ist. Fig. 4 zeigt eine Variante des hydraulischen Systems in Fig. 1, in welchem in den Lastkreisen 4 nicht der Ventilöffnungsgrad des Regulierventiles 8 erfasst wird, sondern über einen Differenzdrucksensor 16 der Differenzdruck Dp zwischen dem Eingang des Lastkreises 4 und dessen Ausgang erfasst wird. Auf Grundlage dieses Differenzdruckes wird in einer angeschlossenen, vorzugsweise in dem Differenzdrucksensor 16 integrierten Signalverarbeitungseinrichtung ein Fehlersignal erzeugt, welches dann an die Pumpenaggregate 10, 12 zu deren Drehzahlregulierung ausgegeben wird. Auch hier werden die Fehlersignale der Differenzdrucksensoren 16 von allen vier Lastkreisen der Regulierung der Drehzahl des ersten stromaufwärtigen Pumpenaggregates 10 zugrundegelegt, während der Drehzahlregulierung des zweiten stromabwärtigen Pumpenaggregates 12 nur die Fehlersignale derjenigen Differenzdrucksensoren 16 zugrundegelegt werden, welche in den Lastkreisen 4 angeordnet sind, die stromabwärts des zweiten Pumpenaggregates 12 gelegen sind.

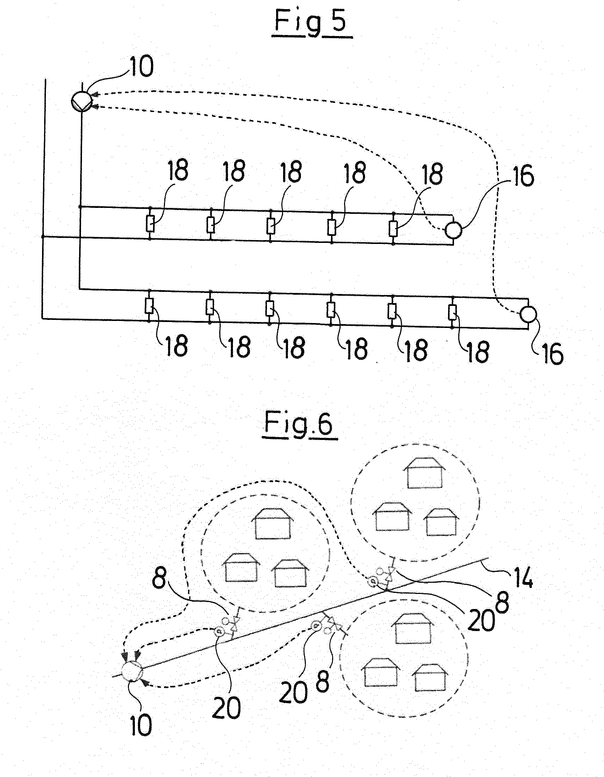

Fig. 5 zeigt ein hydraulisches System, bei welchem mehrere Verbraucher 18, beispielsweise Heizkörper, in zwei zueinander parallel angeordneten Zweigen jeweils parallel zueinander angeordnet sind. Die beiden parallel verbundenen Zweige werden von einem gemeinsamen Pumpenaggregat 10 in Form eines Umwälzpumpenaggregates mit Fluid, beispielsweise Heizmedium in Form von Wasser versorgt. Am Ende jedes der Zweige ist ein Differenzdrucksensor 16 angeordnet, welcher den Differenzdruck Dp zwischen Einlauf und Auslauf des jeweiligen Zweiges am Ende des Zweiges erfasst. Die Differenzdrucksensoren 16 geben über Signalverarbeitungseinrichtungen, wie unten beschrieben wird, wiederum Fehlersignale aus, welche dem Pumpenaggregat 10 zu dessen Drehzahlregulierung zugeführt werden.

Fig. 6 zeigt ein Wasserversorgungsnetzwerk, wie es in Fig. 2 gezeigt ist, nur dass hier nicht der Ventilöffnungsgrad der Ventile 8 erfasst wird, sondern in den Abzweigen, in denen die Regulierventile 8 gelegen sind, Drucksensoren 20 angeordnet sind, welche den Druck p in diesen Zweigen erfassen. In einer geeigneten Signalverarbeitungseinrichtung wird jeweils auf Grundlage des erfassten Druckes p, wie nachfolgend beschrieben werden wird, ein Fehlersignal erzeugt und an das Pumpenaggregat 10 zu dessen Drehzahlregulierung weitergeleitet.

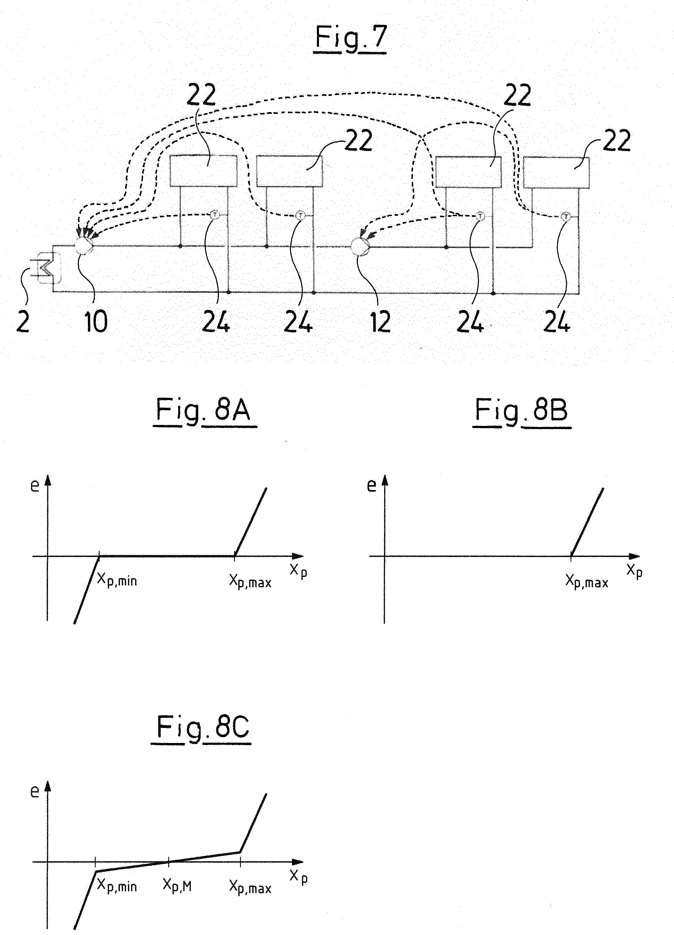

Fig. 7 zeigt ein hydraulisches System ähnlich dem hydraulischen System in Fig. 1, wobei anstatt der Lastkreise 4 mehrere Verbraucher 22, beispielsweise als Wärmetauscher in einem Raum oder Gebäude vorhanden sind. Das System kann beispielsweise ein Heizungs- oder Kühlsystem sein, wobei hier die Wärme- oder Kältequelle 2 als Wärmetauscher gezeigt ist. In den Rückläufen der Verbraucher 22 ist hier jeweils ein Temperatursensor 24 angeordnet, welcher eine Temperatur T, das heißt die Rücklauftemperatur $T_r$ des jeweiligen Verbrauchers 22 erfasst. Auf Grundlage der Temperatursignale der Temperatursensoren 24 wird, wie nachfolgend beschrieben wird, in einer Signalverarbeitungseinrichtung jeweils ein Fehlersignal erzeugt, welches an die Pumpenaggregate 10 und 12 zu deren Drehzahlregulierung weitergeleitet wird. Auch hier erfolgt die Drehzahlregulierung des ersten stromaufwärtigen Pumpenaggregates 10 auf Grundlage der Fehlersignale aller stromabwärts gelegen Temperatursensoren 24, während die Drehzahlregulierung des Pumpenaggregates 12 nur auf Grundlage der Fehlersignale derjenigen Temperatursensoren 24 erfolgt, welche stromabwärts des zweiten Pumpenaggregates 12 gelegen sind.

Die Pumpenaggregate 10 und 12 weisen jeweils eine eigene Steuer- bzw. Regeleinrichtung auf, welche besonders bevorzugt in einem Klemmenkasten oder Elektronikgehäuse direkt in dem Pumpenaggregat bzw. an dessen elektrischen Antriebsmotor angeordnet ist. Die Signalverarbeitungseinrichtungen zum Erzeugen der Fehlersignale sind vorzugsweise in die Sensoren, das heißt die Regulierventile 8, sofern diese den Ventilöffnungsgrad erfassen, die Drucksensoren 16, 22 oder die Temperatursensoren 24 integriert. Alternativ können die Signalverarbeitungseinrichtungen als separate Baugruppen, welche vorzugsweise von den Pumpenaggregaten 10, 12 getrennt sind, ausgebildet sein. Allerdings ist es auch möglich, die Signalverarbeitungseinrichtungen in ein Pumpenaggregat zu integrieren, insbesondere in die Steuereinrichtung eines Pumpenaggregates zu integrieren. Die Signalverarbeitungseinrichtungen ermöglichen es, dass nahezu beliebige Sensoren und Ventile oder Stellelemente, welche ihren Stellgrad, beispielsweise einen Ventilöffnungsgrad erfassen, mit dem Pumpenaggregat 10, 12 verknüpft werden können.

Die Erzeugung der Fehlersignale wird nachfolgend näher anhand der Beispiele in den Fig. 8 bis 10 beschrieben.

Fig. 8A - 8C zeigen drei Beispiele für die Erzeugung eines Fehlersignals e auf Grundlage eines Ventilöffnungsgrades $x_p$, welcher beispielsweise von den oben beschriebenen Regulierventilen 8 erfasst und ausgegeben wird. Im Beispiel gemäß Fig. 8A wird eine abschnittsweise monotone Funktion verwendet, in der drei Funktionen bzw. Abschnitte mit unterschiedlichen Funktionen miteinander verknüpft sind:

$$e = \begin{cases} a(x_p - x_{p,\min}) & , & x_p < x_{p,\min} \\ 0 & , & x_{p,\min} \le x_p \le x_{p,\max} \\ a(x_p - x_{p,\max}) & , & x_{p,\max} < x_p \end{cases}$$

Hier gibt es drei Funktionen. Oberhalb eines Grenzwertes für den Ventilöffnungsgrad $x_{p,\max}$, welcher einen oberen Grenzwert darstellt, wird ein Fehlersignal e nach der Funktion $e = \alpha(x_p - x_{p,\max})$ ausgegeben, wobei der Faktor a eine voreingestellte Konstante ist. Zwischen den Grenzwerten $x_{p,\max}$ und $x_{p,\min}$, wobei $x_{p,\min}$ einen unteren Grenzwert für den Ventilöffnungsgrad darstellt, entspricht die Funktion einer Konstanten, hier dem Wert Null. Das heißt hier ist das Fehlersignal e = 0. Unterhalb des unteren Grenzwertes $x_{p,\min}$ wird ein Fehlersignal e gemäß der Funktion $e = \alpha(x_p - x_{p,\min})$ ausgegeben, das heißt der Ventilöffnungsgrad $x_p$ ist ein linear abhängiges Fehlersignal. Somit sind in diesem Beispiel drei Funktionen miteinander verknüpft, wobei bei Erreichen der Grenzwerte $x_{p,\min}$ und $x_{p,\max}$ jeweils die Funktion gewechselt wird. Der gewünschte Betriebspunkt für das jeweilige Regulierventil 8 für welches die Ventilöffnungsgrade ausgegeben werden, liegt in diesem Beispiel zwischen den Grenzen $x_{p,\min}$ und $x_{p,\max}$, sodass das Fehlersignal e so gestaltet ist, dass die Regelung bestrebt ist, das Pumpenaggregat 10 bzw. das Pumpenaggregat 12 in seiner Drehzahl so zu regulieren, dass das Regulierventil 8 den gewünschten Betriebspunkt, d. h. einen Ventilöffnungsgrad $x_p$ einnimmt, welcher zwischen den Grenzwerten $x_{p,\min}$ und $x_{p,\max}$ gelegen ist. Oberhalb des oberen Grenzwertes $x_{p,\max}$ und unterhalb des unteren Grenzwertes $x_{p,\min}$ wird jeweils ein Fehlersignal e ausgegeben, welches in der Drehzahlregulierung des Pumpenaggregates so berücksichtigt wird, dass sich die Drehzahl ändert, sodass der Ventilöffnungsgrad $x_p$ sich wieder in den Bereich zwischen den Grenzen $x_{p,\min}$ und $x_{p,\max}$ bewegen kann. Der Ventilöffnungsgrad $x_p$ wird bevorzugt über eine unabhängige Regelung, beispielsweise in einem Heizungssystem über einen Raumthermostaten geregelt.

Fig. 8B zeigt eine Variante zu der Gruppe von Funktionen gemäß Fig. 8A, bei welcher auf den unteren Grenzwert $x_{p,\min}$ und somit auf die dritte Funktion, welche unterhalb des Grenzwertes $x_{p,\min}$ Verwendung findet, verzichtet wird. Das heißt, hier wird bei Unterschreiten des oberen Grenzwertes $x_{p,\max}$ stets ein konstanter Wert von Null für das Fehlersignal e ausgegeben.

Fig. 8C zeigt eine weitere Variante, bei welcher die Funktionen für den Bereich unterhalb der unteren Grenze $x_{p,\min}$ und oberhalb der oberen Grenze $x_{p,\max}$ denjenigen entsprechen, welche anhand von Fig. 8A beschrieben wurden. Lediglich zwischen den beiden Grenzen $x_{p,\min}$ und $x_{p,\max}$ wird hier eine Funktion verwendet, welche keinen konstanten Wert Null für das Fehlersignal e ausgibt, sondern ebenfalls ein von dem Ventilöffnungsgrad $x_p$ linear abhängiges Fehlersignal e mit einem Vorzeichenwechsel bei dem Ventilöffnungsgrad $x_{p,M}$, welcher in diesem Beispiel in der Mitte zwischen dem unteren und dem oberen Grenzwert gelegen ist. Die Steigung der Kurve für das Fehlersignal e zwischen der unteren Grenze $x_{p,\min}$ und der oberen Grenze $x_{p,\max}$ ist dabei geringer, als die Steigung oberhalb und unterhalb dieser Grenzwerte. Bei einer solchen Regelung wird ein Fehlersignal e so ausgegeben, dass über die Drehzahlregelung der Pumpenaggregate 10 und 12 erreicht wird, dass der Ventilöffnungsgrad $x_p$ vorzugsweise im Bereich des Mittelwertes $x_{p,M}$ gehalten wird.

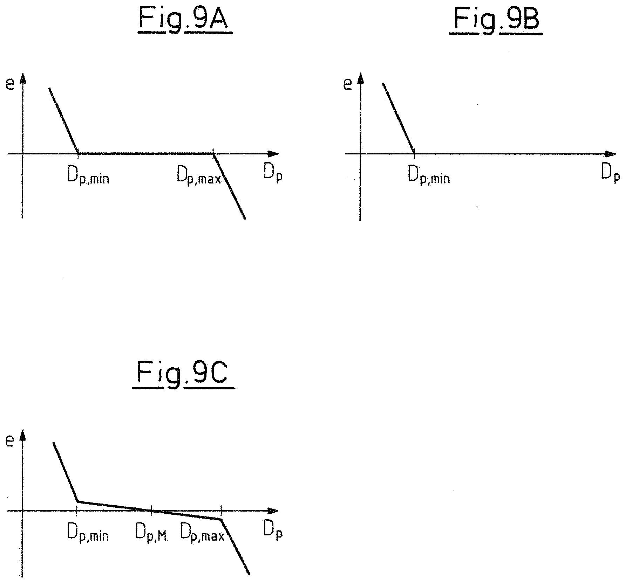

Die Fig. 9A - 9C zeigen nun drei ähnliche Beispiele für die Ausgabe eines Fehlersignals e auf Grundlage eines Differenzdruckes Dp, wie er beispielsweise gemäß der Ausführungsbeispiele in Fig. 4 und 5 erfasst wird. Gemäß Fig. 9A ist eine Gruppe von drei miteinander verknüpften Funktionen vorgesehen:

$$e = \begin{cases} -a(Dp - Dp_{min}) & , \quad Dp < Dp_{min} \\ 0 & , \quad Dp_{min} \leq Dp \leq Dp_{max} \\ -a(Dp - Dp_{max}) & , \quad Dp_{max} < Dp \end{cases}$$

Hier wird unterhalb eines minimalen Differenzdruckwertes, das heißt eines unteren Grenzwertes $Dp_{min}$ ein Fehlersignal e gemäß der Funktion e = -a(Dp - $Dp_{min}$) ausgegeben, wobei a ein konstanter Faktor ist. Zwischen den Grenzwerten $Dp_{min}$ und $Dp_{max}$ (oberer Grenzwert) wird auch hier ein konstantes Fehlersignal e mit dem Wert Null ausgegeben. Oberhalb des oberen Grenzwertes $Dp_{max}$ wird ein Fehlersignal e nach der Funktion e = -a(Dp - $Dp_{max}$) ausgegeben. Das heißt unterhalb des unteren Grenzwertes $Dp_{min}$ und oberhalb des oberen Grenzwertes $Dp_{max}$ wird jeweils ein linear von dem Differenzdruck Dp abhängiges Fehlersignal e ausgegeben. Das Ausführungsbeispiel gemäß Fig. 9B entspricht dem Ausführungsbeispiel gemäß Fig. 9A, wobei die dritte Funktion für den Bereich oberhalb $Dp_{max}$ entfällt, das heißt hier gibt es keinen oberen Grenzwert $Dp_{max}$. Stattdessen wird oberhalb des unteren Grenzwertes $Dp_{min}$ stets ein konstantes Fehlersignal e mit dem Wert Null ausgegeben.

Bei dem Ausführungsbeispiel gemäß Fig. 9C wird ähnlich wie in dem Ausführungsbeispiel gemäß Fig. 8C zwischen den Grenzwerten $Dp_{min}$ und $Dp_{max}$ ebenfalls ein linear von dem erfassten Differenzdruck Dp abhängiges Fehlersignal e ausgegeben, wobei das Fehlersignal e bei dem Wert Dp,M eine Nullstelle hat. Der Mittelwert Dp,M liegt in der Mitte zwischen den Grenzwerten $Dp_{min}$ und $Dp_{max}$. Diese Regelung ist geeignet, um den Differenzdruck im Wesentlichen auf den Mittelwert Dp,M zu regeln, indem ein entsprechendes Fehlersignal e ausgegeben wird, wenn der Differenzdruck von diesem Wert abweicht. Dieses Fehlersignal e hat dann wiederum Einfluss auf die Drehzahl des Pumpenaggregates.

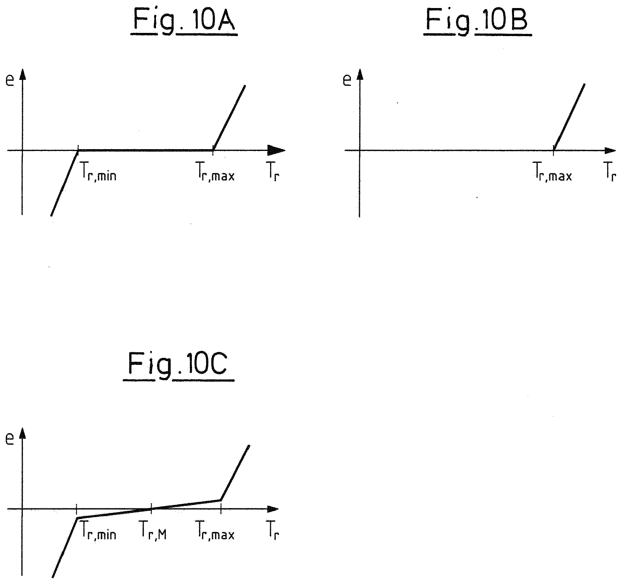

Anhand der Fig. 10A - 10C wird nun ein Beispiel beschrieben, in dem das Fehlersignal e auf Grundlage eines erfassten Temperaturwertes ausgegeben wird. Der Temperaturwert wird beispielsweise in dem vorangehend erläuterten Beispiel gemäß Fig. 7 erfasst, in welchem das hydraulische System ein Kühlsystem ist. Der erfasste Temperaturwert T ist ein Rücklauftemperaturwert $T_r$. Das Fehlersignal wird in dem Ausführungsbeispiel gemäß Fig. 10A nach der folgenden Gruppe von Funktionen gebildet:

$$e = \begin{cases} a(T_r - T_{r,min}) & , \quad T_r < T_{r,min} \\ 0 & , \quad T_{r,min} \leq T_r \leq T_{r,max} \\ a(T_r - T_{r,max}) & , \quad T_{r,max} < T_r \end{cases}$$

Das heißt unterhalb eines unteren Grenzwertes $T_{r,min}$ wird ein Fehlersignal e gemäß der Funktion e = $\alpha(T_r$ - $T_{r,min}$) ausgegeben, das heißt ein Fehlersignal e, welches linear abhängig von der Rücklauftemperatur $T_r$ ist und mit fallender Rücklauftemperatur stärker abfällt, wobei das Fehlersignal negativ ist. Zwischen der unteren Grenze $T_{r,min}$ und dem oberen Grenzwert $T_{r,max}$ wird ein konstantes Fehlersignal e mit dem Wert Null ausgegeben. Oberhalb des oberen Grenzwertes $T_{r,max}$ wird ein linear von der Temperatur $T_r$ abhängiges Fehlersignal e nach der Gleichung e = $\alpha(T_r$ - $T_{r,max}$) ausgegeben. In den vorgenannten Gleichungen ist der Wert a ein konstanter Faktor. Oberhalb des Wertes $T_{r,max}$ wird somit ein Fehlersignal e ausgegeben, welches linear mit der Temperatur $T_r$ steigt.

Das Ausführungsbeispiel gemäß Fig. 10B unterscheidet sich von dem Ausführungsbeispiel gemäß Fig. 10A darin, dass die erste Gleichung für den Bereich unterhalb des unteren Grenzwertes $T_{r,min}$ wegfällt, das heißt es gibt nur zwei Funktionen. Oberhalb des Grenzwertes $T_{r,max}$ wird die linear abhängige Funtion für das Fehlersignal e verwendet, wie sie vorangehend beschrieben wurde. Unterhalb des Wertes $T_{r,max}$ wird ein konstantes Fehlersignal e mit dem Wert Null ausgegeben.

Das Ausführungsbeispiel gemäß Fig. 10C ist hinsichtlich der zwei Funktionen für die Bereiche unterhalb der unteren Grenze $T_{r,min}$ und oberhalb der oberen Grenze $T_{r,max}$ identisch zu dem Ausführungsbeispiel gemäß Fig. 10A. Im Bereich zwischen der unteren Grenze $T_{r,min}$ und der oberen Grenze $T_{r,max}$ wird eine Funktion verwendet, gemäß derer das Fehlersignal e ebenfalls linear abhängig von dem erfassten Temperaturwert $T_r$ ist, wobei die Steigung dieser Funktion geringer ist, als die derjenigen unterhalb und oberhalb der genannten Grenzwerte. Darüber hinaus weist die Funktion zwischen den Grenzen eine Nullstelle bei dem Mittelwert $T_{r,M}$, welcher in der Mitte zwischen der unteren Grenze $T_{r,min}$ und der oberen Grenze $T_{r,max}$ gelegen ist, auf. Das heißt dieses Verfahren eignet sich dazu, die Rücklauftemperatur $T_r$ auf den Wert $T_{r,M}$ zu regeln, indem bei Abweichung von diesem Wert jeweils ein Fehlersignal e ausgegeben wird, welches mit zunehmendem Abstand von dem Sollwert größer bzw. kleiner wird. Durch den flacheren Verlauf der Kurve zwischen den Werten $T_{r,min}$ und $T_{r,max}$ wird eine genauere Regelung auf den Mittelwert $T_{r,M}$ ermöglicht, als es mit dem steileren Kurvenverlauf, das heißt dem Kurvenverlauf mit größerer Steigung oberhalb der oberen Grenze $T_{r,max}$ und unterhalb der unteren Grenze $T_{r,min}$ möglich wäre.

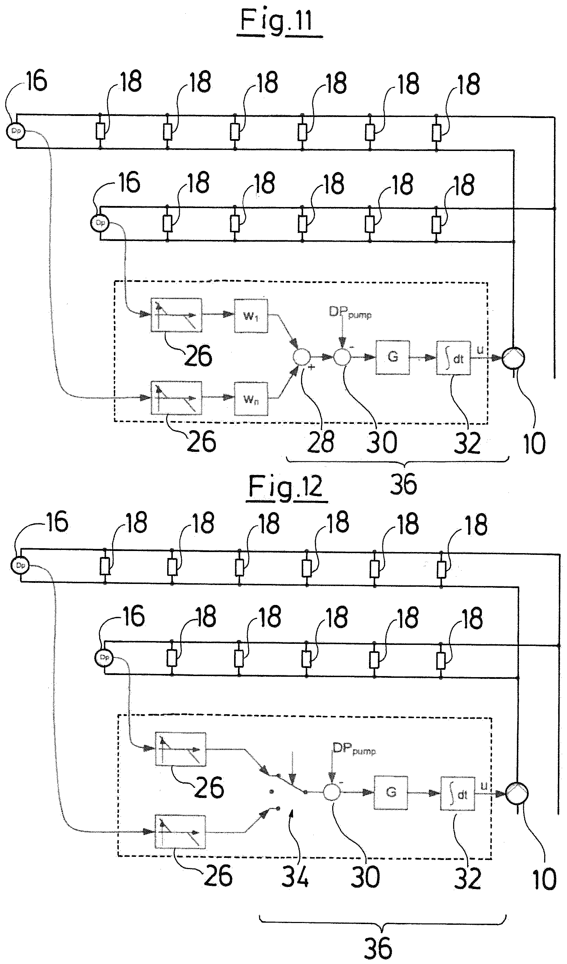

Anhand der Fig. 11 und 12 werden nun zwei Varianten beschrieben, wie das Fehlersignal e auf die Drehzahl des Pumpenaggregates 10, 12 Einfluss nehmen kann. Die Beispiele gemäß Fig. 11 und 12 basieren auf einem hydraulischen System, wie es in Fig. 5 gezeigt ist. Es ist jedoch zu verstehen, dass die Verarbeitung der erzeugten Fehlersignale e in entsprechender Weise auch bei anderen, insbesondere den vorangehend beschriebenen hydraulischen Systemen zur Verwendung kommen kann. In beiden Ausführungsbeispielen gemäß Fig. 11 und 12 wird jeweils zunächst in einer Signalverarbeitungseinrichtung 26 jeweils das Ausgangssignal eines Differenzdrucksensors 16 verarbeitet, um das Fehlersignal e in der vorangehend beschriebenen Weise zu erzeugen. Dabei ist vorzugsweise jedem Sensor 16 eine eigene Signalverarbeitungseinrichtung 26 zugeordnet, wobei weiter bevorzugt die Signalverarbeitungseinrichtung 26 auch mit dem jeweiligen Sensor eine integrierte Baueinheit bilden. Die Signalverarbeitungseinrichtung 26 ist bevorzugt in der Nähe des Sensors angeordnet, das heißt beabstandet zu dem Pumpenaggregat 10, sodass lediglich das Fehlersignal e zu dem Pumpenaggregat übertragen wird. Die Funktionen, wie sie vorangehend beschrieben wurden und in der Signalverarbeitungseinrichtung 26 zur Erzeugung des Fehlersignals e abgelegt sind, sind vorzugsweise an die Charakteristik des Sensors bzw. des hydraulischen Bereiches, in dem der Sensor angeordnet ist, angepasst, sodass das Fehlersignal e die Bedürfnisse in dem hydraulischen Bereich wiedergibt, der hydraulische Bereich beispielsweise hinsichtlich des Differenzdruckes Dp auf einen Sollwert geregelt werden kann. Bei Verwendung von anderen geeigneten Sensoren, wie sie vorangehend beschrieben wurden, kann das Fehlersignal e auch so ausgegeben werden, dass ein gewünschter Ventilöffnungsgrad, eine gewünschte Temperatur etc. eingehalten wird.

In dem Beispiel gemäß Fig. 11 werden die Fehlersignale e von den einzelnen Differenzdrucksensoren 16 addiert. Im gezeigten Beispiel sind zwei Differenzdrucksensoren 16 gezeigt, es ist jedoch zu verstehen, dass entsprechend mehr Differenzdrucksensoren 16 mit zugehörigen Signalverarbeitungseinrichtungen 26 verwendet werden können, wobei für jeden Differenzdrucksensor 16 ein eigenes Fehlersignal e ausgegeben wird. Auch können neben Differenzdrucksensoren 16 weitere Sensoren, wie beispielsweise Temperatursensoren oder Sensoren zur Erfassung eines Ventilöffnungsgrades oder Durchflusssensoren entsprechend mit verknüpft werden, wobei auch diese dann jeweils eine Signalverarbeitungseinrichtung 26 aufweisen, welche ein zugehöriges Fehlersignal e ausgibt. In diesem Beispiel werden die Fehlersignale e zusätzlich über Gewichtungsfaktoren $w_1$ bis $w_n$ unterschiedlich gewichtet, bevor sie in einem Addierer 28 addiert werden. In einem weiteren Addierer 30 wird nachfolgend ein Signal $DP_{pump}$, welches negativ ist, addiert, das heißt das Signal $DP_{pump}$ wird subtrahiert. Das Signal $DP_{pump}$ entspricht der Veränderung der Leistungsaufnahme oder des Energieverbrauches in Abhängigkeit zu einem Kontrollsignal u für das Pumpenaggregat 10. Im nachfolgenden Schritt wird diese Summe mit einem Verstärkungsfaktor G multipliziert und danach in dem Integrierer 32 integriert, sodass das abhängige Kontrollsignal u zur Steuerung des Pumpenaggregates 10 ausgegeben wird. Das Kontrollsignal u kann direkt der Drehzahl n des Pumpenaggregates, aber auch der Förderhöhe h, das heißt dem Differenzdruck über dem Pumpenaggregat 10, 12, oder dem Ausgangsdruck $p_{out}$ oder dem Ausgangs-Durchfluss $q_{out}$ des Pumpenaggregates 10, 12 entsprechen. Wenn das Kontrollsignal u nicht direkt der Drehzahl n entspricht, wird somit indirekt auf die Drehzahl Einfluss genommen, da die Regelung des Druckes beispielsweise über die Drehzahl des Pumpenaggregates 10, 12 erfolgt.

Gemäß dem vorangehenden Beispiel wird die Änderung des Kontrollsignals u gemäß der nachfolgenden Formel berechnet:

$$\frac{du}{dt} = -G\left( DP_{pump} - \sum_{i=1}^{N} w_i e_i \right)$$

Bei dieser Gleichung wird gleichzeitig eine Optimierung hinsichtlich des Energieverbrauches über das Signal $DP_{pump}$, welches durch einen konstanten Wert angenähert werden kann, erreicht. Anstatt dieses Signals könnte eine Optimierung auch über eine Konstante in der folgenden Weise erfolgen:

$$\frac{du}{dt} = \begin{cases} s & , \quad 0 > \sum_{i=1}^{N} e_i \\ -s & , \quad otherwise \end{cases}$$

Dabei ist der Wert s ein konstanter Faktor, welcher in dem Fall positiv ist, dass die Summe der Fehlersignale e über die gesamte Anzahl N von Sensoren und/oder signalausgebenden Einheiten, wie Ventile, kleiner Null ist. Ein konstanter Wert -s wird in allen anderen Fällen ausgegeben.

Gemäß der vorangehend beschriebenen Ausführungsform wurden Differenzialausdrücke verwendet. Es ist jedoch zu verstehen, dass stattdessen auch diskrete Versionen Verwendung finden könnten, beispielsweise in Form folgender Gleichungen:

$$u_{k+1} = u_k - G\left(DP_{pump} - \sum_{i=1}^{N} e_i\right) \qquad u_{k+1} = u_k + \begin{cases} s & , \quad 0 > \sum_{i=1}^{N} e_i \\ -s & , \quad otherwise \end{cases}$$

In diesen Gleichungen ist k ein zeitlicher Schritt. Die Faktoren G und s sind wiederum Konstanten.

Anstatt die Fehlersignale e mit Gewichtungsfaktoren w zu gewichten, können die Fehlersignale e gegebenenfalls in entsprechender Weise auch ohne Gewichtung direkt addiert werden.

Anstelle der Addition der Fehlersignale e kann auch eine Auswahl stattfinden, wie es anhand von Fig. 12 beschrieben wird. In dem Beispiel gemäß Fig. 12 ist im Unterschied zu dem Beispiel gemäß Fig. 11 der Addierer 26 durch eine Auswahleinrichtung 34 ersetzt. Das heißt, über die Auswahleinrichtung 34 wird stets ein Fehlersignal e ausgewählt, welches dann dem Addierer 30 zugeführt wird. Dem Addierer 30 nachfolgend erfolgt die weitere Signalverarbeitung wie oben anhand von Fig. 11 beschrieben. Die Auswahleinrichtung 34 kann beispielsweise so ausgebildet sein, dass jeweils das Fehlersignal e eines der Sensoren gemäß einer vorgegebenen Bedingung wie einer Priorisierung, ausgewählt wird. Das heißt, es wird zunächst das Fehlersignal e eines Sensors mit höchster Priorität und dann gegebenenfalls das Fehlersignal eines oder mehrerer Sensoren mit nachfolgender Priorität ausgewählt, sofern die Signale der vorangehend priorisierten Sensoren Null sind. Verschieden geeignete Auswahlverfahren können hier zur Anwendung kommen. Auch andere Priorisierungen sind möglich. So können einzelne Sensoren hinsichtlich ihrer oberen Grenze oder ihrer unteren Grenze priorisiert werden. Wenn beispielsweise das Maximum priorisiert wird, würde das Fehlersignal e dieser Sensoren positiv sein, wie in den vorangehend beschriebenen Beispielen gezeigt. So könnte beispielsweise lediglich die Summe dieser Sensoren, deren Fehlersignal e positiv ist, berücksichtigt werden. Für den Fall, dass für keinen dieser priorisierten Sensoren die obere Grenze überschritten ist, das heißt kein positives Fehlersignal ausgegeben wird, könnte dann auf Grundlage sämtlicher anderer gegebenenfalls auch negativer Fehlersignale in der vorangehend beschriebenen Weise die Regelung durchgeführt werden.

Der mit dem Bezugszeichen 36 in Fig. 11 und 12 gekennzeichnete Teil der Regeleinrichtung ist vorzugsweise in die Regeleinrichtung des Pumpenaggregates 10, 12 integriert, während die Signalverarbeitungseinrichtungen 26 bevorzugt den Sensoren zugeordnet bzw. in diese integriert sind.

**Bezugszeichenliste**

| | |
|---|---|
| 2 | - Wärme- oder Kältequelle |
| 4 | - Lastkreise |
| 6 | - Mischerpumpe |
| 8 | - Regulierventil |
| 10, 12 | - Pumpenaggregat |
| 14 | - Versorgungsleitung |
| 16 | - Differenzdrucksensor |
| 18 | - Verbraucher |
| 20 | - Drucksensor |
| 22 | - Verbraucher |
| 24 | - Temperatursensor |

26          - Signalverarbeitungseinrichtung

28, 30      - Addierer

32          - Integrierer

34          - Auswahleinrichtung

36          - Teil der Regeleinrichtung

e           - Fehlersignal

$x_p$         - Ventilöffnungsgrad

Dp          - Differenzdruck

T           - Temperaturdruck

$DP_{pump}$- Änderung der Leistungsaufnahme

G           - Verstärkungsfaktor

u           - Kontrollsignal

**Patentansprüche**

1.  Regelverfahren für ein Pumpenaggregat (10, 12) in einem pneumatischen oder hydraulischen System, bei welchem die Drehzahl (n) des Pumpenaggregates (10, 12) in Abhängigkeit mehrerer in dem System erfassten Variablen (Dp, p, T, $x_p$) regulierbar ist, **dadurch gekennzeichnet, dass**
    aus den erfassten Variablen (Dp, p, T, $x_p$) jeweils auf Grundlage einer abschnittsweise monotonen Funktion ein Fehlersignal (e) erzeugt wird,
    mehrere Fehlersignale (e) addiert werden und dass eine Regulierung der Drehzahl (n) des Pumpenaggregates (10, 12) auf Grundlage der addierten Fehlersignale (e) so erfolgt, dass sich das addierte Fehlersignal dem Wert null annähert.

2.  Regelverfahren nach Anspruch 1, **dadurch gekennzeichnet, dass** die zumindest eine Variable ein in dem System erfasster Druckwert (Dp, p) oder Ventilöffnungsgrad ($x_p$) ist.

3.  Regelverfahren nach Anspruch 1 oder 2, **dadurch gekennzeichnet, dass** die zumindest eine Variable ein in dem System erfasster Temperaturwert (T) oder Durchflusswert ist.

4.  Regelverfahren nach einem der vorangehenden Ansprüche, **dadurch gekennzeichnet, dass** die mehreren erfassten Variablen mit zumindest einem Grenzwert verglichen werden und bei Erreichen des Grenzwertes die Funktion der abschnittsweise monotonen Funktion, auf deren Grundlage das Fehlersignal (e) erzeugt wird, gewechselt wird.

5.  Regelverfahren gemäß einem der vorangehenden Ansprüche, **dadurch gekennzeichnet, dass** die mehreren erfassten Variablen mit einem oberen und einem unteren Grenzwert verglichen werden und bei Erreichen des oberen Grenzwertes sowie bei Erreichen des unteren Grenzwertes die Funktion der abschnittsweise monotonen Funktion, auf deren Grundlage das Fehlersignal (e) erzeugt wird, gewechselt wird.

6.  Regelverfahren nach Anspruch 4 oder 5, **dadurch gekennzeichnet, dass** die oberhalb des oberen Grenzwertes und/oder unterhalb des unteren Grenzwertes zum Einsatz kommenden Funktionen ein von der Größe der erfassten Variablen (Dp, p, T, $x_p$) abhängiges, insbesondere linear abhängiges Fehlersignal (e) ausgeben.

7.  Regelverfahren nach Anspruch 6, **dadurch gekennzeichnet, dass** unterhalb des oberen Grenzwertes und/oder oberhalb des unteren Grenzwertes eine Funktion zum Einsatz kommt, welche ein von der Größe der Variablen (Dp, p, T, $x_p$) abhängiges, insbesondere linear abhängiges Fehlersignal (e) ausgibt, wobei die Funktionen zwischen Variable und Fehlersignal (e) oberhalb und unterhalb des jeweiligen Grenzwertes unterschiedlich sind, insbesondere unterschiedliche Steigungen aufweisen.

8. Regelverfahren nach Anspruch 7, **dadurch gekennzeichnet, dass** in einem Bereich oberhalb des unteren Grenzwertes und unterhalb des oberen Grenzwertes die Funktion eine Nullstelle mit einem Vorzeichenwechsel aufweist.

9. Regelverfahren nach einem der Ansprüche 5 bis 8, **dadurch gekennzeichnet, dass** das Fehlersignal (e), welches bei Erreichen des oberen Grenzwertes und oberhalb des oberen Grenzwertes ausgegeben wird ein anderes Vorzeichen aufweist als das Fehlersignal (e), welches bei Erreichen oder unterhalb des unteren Grenzwertes ausgegeben wird.

10. Regelverfahren nach einem der vorangehenden Ansprüche, **dadurch gekennzeichnet, dass** das Erzeugen des Fehlersignales (e) in einer einem Sensor zum Erfassen der Variablen zugeordneten Signalverarbeitungseinrichtung (26) erfolgt und das erzeugte Fehlersignal (e) zu einer Regeleinrichtung (36) des Pumpenaggregates (10, 12) übertragen wird, welche die Regulierung der Drehzahl (n) des Pumpenaggregates (10, 12) bewirkt.

11. Regelverfahren nach einem der vorangehenden Ansprüche, **dadurch gekennzeichnet, dass** alle Fehlersignale (e) addiert werden und die Regulierung der Drehzahl (n) des Pumpenaggregates (10, 12) auf Grundlage der addierten Fehlersignale (e) erfolgt.

12. Regelverfahren nach einem der vorangehenden Ansprüche, **dadurch gekennzeichnet, dass** die einzelnen Fehlersignale (e) vor der Addition mit individuellen Gewichtungsfaktoren ($w_n$) multipliziert werden.

13. Regelverfahren nach einem der vorangehenden Ansprüche, **dadurch gekennzeichnet, dass** aus einer Mehrzahl von Fehlersignalen (e) ein oder mehrere Fehlersignale (e) ausgewählt werden, auf deren Grundlage die Regulierung der Drehzahl (n) des Pumpenaggregates (10, 12) erfolgt.

14. Regelverfahren nach einem der vorangehenden Ansprüche, **dadurch gekennzeichnet, dass** die Drehzahl (n) des Pumpenaggregates in Abhängigkeit eines Differenzdruckes oder eines Durchflusses geregelt wird und der Differenzdruck oder der Durchfluss auf Grundlage eines oder mehrerer Fehlersignale (e) reguliert wird.

15. Regelverfahren nach einem der vorangehenden Ansprüche, **dadurch gekennzeichnet, dass** die Drehzahl (n) des Pumpenaggregates abhängig von dem Fehlersignal (e) direkt oder indirekt in vorgegebenen Schritten verändert wird.

16. Regelverfahren nach einem der vorangehenden Ansprüche, **dadurch gekennzeichnet, dass** die Drehzahl (n) des zumindest einen Pumpenaggregates zusätzlich zu dem Fehlersignal (e) auf Grundlage eines Algorithmus zur Minimierung der Leistungsaufnahme geregelt wird.

17. Regelverfahren nach Anspruch 16, **dadurch gekennzeichnet, dass** der Algorithmus zur Minimierung des Energieverbrauches derart wirkt, dass er bestrebt ist, die Drehzahl (n) des Pumpenaggregates (10, 12) zu verringern.

18. Pumpensystem mit zumindest einem Sensor zum Erfassen mehrerer Variablen in einem hydraulischen oder pneumatischen System und einer Signalverarbeitungseinrichtung (26), welche zum Erzeugen von Fehlersignalen (e) auf Grundlage der erfassten Variablen (Dp, p, T, xp) ausgebildet ist, sowie mit zumindest einem Pumpenaggregat (10, 12) mit einer Regeleinrichtung (36), welche zum Empfang der Fehlersignale (e) von der Signalverarbeitungseinrichtung (26) und zur Regulierung der Drehzahl (n) des Pumpenaggregates (10, 12) auf Grundlage der Fehlersignale (e) ausgebildet, wobei die Regeleinrichtung (36) und die Signalverarbeitungseinrichtung (26) zum Ausführen eines Regelverfahrens gemäß einem der Ansprüche 1 bis 17 ausgebildet sind.

**Claims**

1. A control method for a pump assembly (10, 12) in a pneumatic or hydraulic system, with which the speed (n) of the pump assembly (10, 12) can be controlled in dependence on several variables (Dp, p, T, xp) which are detected in the system,
   **characterised in that**
   an error signal (e) is produced from the detected variables (Dp, p, T, xp) on the basis of a sectionwise monotonic function,

several error signals (e) are added and that a control of the speed (n) of the pump assembly (10, 12) is effected on the basis of the added error signals (e) such that the added error signal approaches the value zero.

2. A control method according to claim 1, **characterised in that** the at least one variable is a pressure value (Dp, p) or valve opening degree (xp), which is detected in the system.

3. A control method according to claim 1 or 2, **characterised in that** the at least one variable is a temperature value (T) or flow value, which is detected in the system.

4. A control method according to one of the preceding claims, **characterised in that** the several detected variables are compared with at least one limit value and on reaching the limit value, the function of the sectionwise monotonic function, on the basis of which the error signal (e) is produced, is exchanged.

5. A control method according to one of the preceding claims, **characterised in that** the several detected variables are compared with an upper and a lower limit value and on reaching the upper limit value as well as on reaching the lower limit value, the function of the sectionwise monotonic function, on the basis of which the error signal (e) is produced, is exchanged.

6. A control method according to claim 4 or 5, **characterised in that** the functions which are applied above the upper limit value and/or below the lower limit value output an error signal (e) which is dependent, in particularly linearly dependent, on the magnitude of the detected variables (Dp, p, T, xp).

7. A control method according to claim 6, **characterised in that** a function which outputs an error signal (e) which is dependent, in particular linearly dependent on the magnitude of the variables (Dp, p, T, xp) is applied below the upper limit value and/or above the lower limit value, wherein the functions between the variable and the error signal (e) are different, in particular have different gradients, above and below the respective limit value.

8. A control method according to claim 7, **characterised in that** the function has a zero point with a sign change in a region above the lower limit value and below the upper limit value.

9. A control method according to one of the claims 5 to 8, **characterised in that** the error signal (e) which is outputted on reaching the upper limit value and above the upper limit value has a different sign than the error signal (e) which is outputted on reaching the lower limit value or below the lower limit value.

10. A control method according to one of the preceding claims, **characterised in that** the production of the error signal (e) is effected in a signal processing device (26) which is assigned to a sensor for detecting the variables, and the produced error signal (e) is transferred to a control device (36) of the pump assembly (10, 12) which effects the control of the speed (n) of the pump assembly (10, 12).

11. A control method according to one of the preceding claims, **characterised in** all error signals (e) are added, and the control of the speed (n) of the pump assembly (10, 12) is effected on the basis of the added error signals (e).

12. A control method according to one of the preceding claims, **characterised in that** the individual error signals (e) are multiplied by individual weighting factors (wn) before the addition.

13. A control method according to one of the preceding claims, **characterised in that** one or more error signals (e) are selected from a plurality of error signals (e), and the control of the speed (n) of the pump assembly (10, 12) is effected on the basis of these one or more selected error signals.

14. A control method according to one of the preceding claims, **characterised in that** the speed (n) of the pump assembly is controlled in dependence on a differential pressure or a flow, and the differential pressure or flow is controlled on the basis of one or more error signals (e).

15. A control method according to one of the preceding claims, **characterised in that** the speed (n) of the pump assembly is changed directly or indirectly in defined steps, in dependence on the error signal (e).

16. A control method according to one of the preceding claims, **characterised in** the speed (n) of the at least one pump assembly, additionally to the error signal (e), is controlled on the basis of an algorithm for minimising the power consumption.

**17.** A control method according to claim 16, **characterised in that** the algorithm for minimising the energy consumption acts in a manner such that it strives to reduce the speed (n) of the pump assembly (10, 12).

**18.** A pump system with at least one sensor for detecting several variables in a hydraulic or pneumatic system and with a signal processing device (26) which is designed for producing error signals (e) on the basis of the detected variables (Dp, p, T, xp), as well as with at least one pump assembly (10, 12) with a control device (36) which is designed for receiving the error signals (e) from the signal processing device (26) and for the control of the speed (n) of the pump assembly (10, 12) on the basis of the error signals (e), wherein the control device (36) and the signal processing device (26) are designed for carrying out a control method according to one of the claims 1 to 17.

**Revendications**

**1.** Procédé de régulation pour groupe motopompe (10, 12) d'un système pneumatique ou hydraulique, dans lequel la vitesse (n) du groupe motopompe (10, 12) peut être régulée en fonction de plusieurs variables détectées dans le système (Dp, p, T, $X_p$), **caractérisé en ce qu'**à partir des variables détectées (Dp, p, T, $X_p$), un signal d'erreur (e) est produit respectivement sur la base d'une fonction monotone par segments, **en ce que** plusieurs signaux d'erreur (e) sont additionnés et **en ce qu'**une régulation de la vitesse (n) du groupe motopompe (10, 12) s'effectue sur la base des signaux d'erreur (e) additionnés de façon à ce que le signal d'erreur additionné soit proche de zéro.

**2.** Procédé de régulation selon la revendication 1, **caractérisé en ce qu'**au moins une variable est une valeur de pression (Dp, p) ou un degré d'ouverture de soupape ($X_p$) détecté(e) dans le système.

**3.** Procédé de régulation selon la revendication 1 ou 2, **caractérisé en ce qu'**au moins une variable est une valeur de température (T) ou une valeur de débit détectée dans le système.

**4.** Procédé de régulation selon l'une des revendications précédentes, **caractérisé en ce que** les variables détectées, d'un nombre supérieur à un, sont comparées avec au moins une valeur limite, et **en ce que**, lorsque la valeur limite est atteinte, la fonction de la fonction monotone par segments, sur la base de laquelle est produit le signal d'erreur (e), est modifiée.

**5.** Procédé de régulation selon l'une des revendications précédentes, **caractérisé en ce que** les variables détectées, d'un nombre supérieur à un, sont comparées avec une valeur limite supérieure et une valeur limite inférieure et **en ce qu'**en cas d'atteinte de la valeur limite supérieure et de la valeur limite inférieure, la fonction de la fonction monotone par segments, sur la base de laquelle est produit le signal d'erreur (e), est modifiée.

**6.** Procédé de régulation selon la revendication 4 ou 5, **caractérisé en ce que** les fonctions utilisées au-dessus de la valeur limite supérieure et/ou au-dessous de la valeur limite inférieure émettent un signal d'erreur (e) dépendant de la grandeur des variables détectées (Dp, p, T, $X_p$), en particulier linéairement dépendant.

**7.** Procédé de régulation selon la revendication 6, **caractérisé en ce qu'**au-dessous de la valeur limite supérieure et/ou au-dessus de la valeur limite inférieure, on utilise une fonction qui émet un signal d'erreur (e) dépendant de la grandeur des variables (Dp, p, T, $X_p$), en particulier linéairement dépendant, les fonctions étant différentes entre la variable et le signal d'erreur (e) au-dessus et au-dessous de la valeur limite respective, et présentant en particulier des pentes différentes.

**8.** Procédé de régulation selon la revendication 7, **caractérisé en ce que** dans une plage située au-dessus de la valeur limite inférieure et au-dessous de la valeur limite supérieure, la fonction présente une position zéro avec un changement de signe.

**9.** Procédé de régulation selon l'une des revendications 5 à 8, **caractérisé en ce que** le signal d'erreur (e) qui est produit en cas d'atteinte de la valeur limite supérieure et au-dessus de la valeur limite supérieure présente un autre signe que le signal d'erreur (e) qui est produit en cas d'atteinte de la valeur limite inférieure ou d'une valeur inférieure à la valeur limite inférieure.

**10.** Procédé de régulation selon l'une des revendications précédentes, **caractérisé en ce que** la génération du signal d'erreur (e) s'effectue dans un dispositif de traitement de signaux (26) associé à un capteur de détection des variables, et **en ce que** le signal d'erreur (e) généré est transmis à un dispositif de régulation (36) du groupe motopompe (10, 12) qui opère la régulation de la vitesse (n) du groupe motopompe (10, 12).

11. Procédé de régulation selon l'une des revendications précédentes, **caractérisé en ce que** tous les signaux d'erreur (e) sont additionnés et que la régulation de la vitesse (n) du groupe motopompe (10, 12) s'effectue sur la base des signaux d'erreur (e) additionnés.

12. Procédé de régulation selon l'une des revendications précédentes, **caractérisé en ce que** les différents signaux d'erreur (e) sont multipliés par des facteurs de pondération individuels ($W_n$) avant l'addition.

13. Procédé de régulation selon l'une des revendications précédentes, **caractérisé en ce qu'**à partir d'une pluralité de signaux d'erreur (e) sont sélectionnés un ou plusieurs signaux d'erreur (e) sur la base desquels s'opère la régulation de la vitesse (n) du groupe motopompe (10, 12).

14. Procédé de régulation selon l'une des revendications précédentes, **caractérisé en ce que** la vitesse (n) du groupe motopompe est régulée en fonction d'une pression différentielle ou d'un débit, et **en ce que** la pression différentielle ou le débit est régulé sur la base d'un ou de plusieurs signaux d'erreur (e).

15. Procédé de régulation selon l'une des revendications précédentes, **caractérisé en ce que** la vitesse (n) du groupe motopompe est modifiée directement ou indirectement par étapes prédéterminées en fonction du signal d'erreur (e).

16. Procédé de régulation selon l'une des revendications précédentes, **caractérisé en ce que** la vitesse (n) du groupe motopompe, au moins au nombre de un, est régulée, en plus du signal d'erreur (e), sur la base d'un algorithme permettant de réduire à un minimum la puissance absorbée.

17. Procédé de régulation selon la revendication 16, **caractérisé en ce que** l'algorithme permettant de réduire à un minimum la consommation d'énergie opère de telle sorte qu'il tend à réduire la vitesse (n) du groupe motopompe (10, 12).

18. Système de pompe comprenant au moins un capteur pour la détection de plusieurs variables dans un système hydraulique ou pneumatique, et un dispositif de traitement de signaux (26) qui est conçu pour produire des signaux d'erreur (e) sur la base des variables détectées (Dp, p, T, $X_p$), ainsi qu'au moins un groupe motopompe (10, 12) pourvu d'un dispositif de régulation (36) qui est conçu pour recevoir les signaux d'erreur (e) du dispositif de traitement de signaux (26) et pour réguler la vitesse (n) du groupe motopompe (10, 12) sur la base des signaux d'erreur (e), le dispositif de régulation (36) et le dispositif de traitement de signaux (26) étant conçus pour mettre en oeuvre un procédé de régulation selon l'une des revendications 1 à 17.

Fig.1

Fig.2

## Fig.3

## Fig.4

## Fig 5

## Fig.6

## Fig.7

## Fig.8A

## Fig.8B

## Fig.8C

Fig.9A

Fig.9B

Fig.9C

## Fig.10A

## Fig.10B

## Fig.10C

## Fig.11

## Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3315828
- EP 1323984 A1
- DE 102006049440 A1
- CA 2274782 A1